# EUROPÄISCHE PATENTSCHRIFT

(11) **EP 0 914 363 B1**
(45) Veröffentlichungstag und Bekanntmachung des Hinweises auf die Patenterteilung: **27.09.2000**
(21) Anmeldenummer: 97932826.7
(22) Anmeldetag: 14.07.1997
(51) Int. Cl.: C08G 69/10, C08G 73/06, C08F 283/04

(54) **VERFAHREN ZUR HERSTELLUNG VON COKONDENSATEN AUS ASPARAGINSÄURE UND AMINEN**
PROCESS FOR PREPARING COCONDENSATES OF ASPARTIC ACID AND AMINES
PROCEDE DE PREPARATION DE CO-CONDENSES D'ACIDE ASPARTIQUE ET D'AMINES

(30) Priorität: 26.07.1996 DE 19630280
(43) Veröffentlichungstag der Anmeldung: 12.05.1999
(73) Patentinhaber: BASF AKTIENGESELLSCHAFT, 67056 Ludwigshafen (DE)
(72) Erfinder: KRONER, Matthias, D-67304 Eisenberg (DE)
(86) Internationale Anmeldenummer: EP9703751
(87) Internationale Veröffentlichungsnummer: WO9804613

(56) Entgegenhaltungen:
- WO-A-94/01486
- WO-A-95/21882
- WO-A-96/00743
- WO-A-96/35737
- WO-A-97/09409
- US-A- 5 510 426

## Beschreibung

Die Erfindung betrifft ein Verfahren zur Herstellung von Cokondensaten aus Asparaginsäure und Aminen durch Erhitzen von Asparaginsäure und Aminen in Gegenwart von sauren Katalysatoren unter Durchmischen bei Temperaturen bis zu 300°C in einem Extruder.

Aus WO-A-94/01486 ist die Herstellung modifizierter Polyasparaginsäuren bekannt. Gemäß einer Verfahrensvariante unterwirft man Mischungen aus Asparaginsäure und einem Comonomeren, das mindestens eine funktionelle Gruppe aufweist, bei Temperaturen von 100 bis 270°C der Polycokondensation. Geeignete Comonomere sind beispielsweise Fettsäuren, mehrbasische Carbonsäuren, Anhydride mehrbasischer Carbonsäuren, Alkohole, Amine, alkoxylierte Alkohole und alkoxylierte Amine. Die Polykondensation erfolgt in Gegenwart von sauren Katalysatoren, z.B. Phosphorsäure, Salzsäure oder Schwefelsäure. Die Polycokondensate werden beispielsweise als Zusatz zu Wasch- und Reinigungsmitteln verwendet.

Aus der WO-A-96/05241 ist ein Verfahren zur Herstellung von Polyasparaginsäure durch Polykondensation von feinteiliger Asparaginsäure bei Temperaturen oberhalb von 150°C in Gegenwart von sauren Katalysatoren bekannt. Die sauren Katalysatoren werden erst in der Reaktionszone mit der auf eine Temperatur von mindestens 150°C erhitzten Asparaginsäure in Kontakt gebracht. Die sauren Katalysatoren werden vorzugsweise in einem solchen Maße auf die Oberfläche der feinteiligen Asparaginsäure aufgesprüht, daß darauf keine klebrigen Lösungen entstehen. Auf diese Weise wird die Bildung einer zusammenhängenden bzw. verklumpten Polymermasse vermieden.

Aus der älteren, nicht vorveröffentlichten DE-Anmeldung 19 517 715.0 ist ein Verfahren zur Herstellung von Polycokondensaten der Asparaginsäure bekannt, wobei man zu einer auf 150 bis 210°C erhitzten Asparaginsäure eine als Katalysator wirkende Säure und mindestens ein Comonomer in einem solchen Maße zufügt, daß die Bildung klebriger Lösungen vermieden wird. Die Cokondensation erfolgt vorzugsweise in einer Wirbelschicht.

Aus der EP-A-0 644 257 ist ein Verfahren zur thermischen Polykondensation von Asparaginsäure in Gegenwart von sauren Katalysatoren bekannt. Die Polykondensation kann gegebenenfalls in Gegenwart von polyfunktionellen Monomeren wie Diaminen oder Polyaminen vorgenommen werden. Sie erfolgt in dem Temperaturbereich von 110 bis 300°C unter intensiver Mischung der Reaktionspartner, z.B. in ein- oder mehrwelligen Extrudern. Man erhält eine feinteilige gegebenenfalls modifizierte Polyasparaginsäure, wobei mehr als 80 % der eingesetzten Asparaginsäure in kondensierter Form vorliegen.

Die oben beschriebenen Verfahren haben den Nachteil, daß bei der Verwendung von Aminen als Comonomere besonders klebrige Reaktionsmassen entstehen, die nur unbefriedigend gehandhabt werden.

Der Erfindung liegt die Aufgabe zugrunde, ein verbessertes Verfahren zur Herstellung von Cokondensaten aus Asparaginsäure und Aminen zur Verfügung zu stellen.

Die Aufgabe wird erfindungsgemäß gelöst mit einem Verfahren zur Herstellung von Cokondensaten aus Asparaginsäure und Aminen durch Erhitzen von Asparaginsäure und Aminen in Gegenwart von sauren Katalysatoren unter Durchmischen bei Temperaturen bis zu 300°C in einem Extruder, wenn man dem Einzugsbereich des Extruders teilchenförmige Asparaginsäure zuführt und in einer anschließenden Dosierzone mindestens ein Amin und einen sauren Katalysator zuführt, die entstehende Mischung unter Erhitzen so weit kondensiert, daß am Ende des Extruders ein Vorkondensat ausgetragen wird, das mindestens 20 bis 95 Gew.-% der eingesetzten Asparaginsäure in kondensierter Form enthält und das Vorkondensat anschließend bei Temperaturen von 150 bis 300°C zu Ende kondensiert.

Als Asparaginsäure kann man L-, DL- oder D-Asparaginsäure sowie Mischungen der genannten Asparaginsäuren einsetzen. Die Asparaginsäure kann jede beliebige Kristallgröße und Kristallform haben. Der mittlere Teilchendurchmesser der Asparaginsäurekristalle kann beispielsweise 0,01 bis 5, vorzugsweise 0,1 bis 2 mm betragen.

Die feinteilige Asparaginsäure wird mit primären, sekundären oder tertiären Aminen kondensiert. Vorzugsweise kommen Alkylmonoamine in Betracht, die bis zu 100 C-Atome in der Alkylkette aufweisen. Besonders bevorzugt werden primäre und sekundäre Alkylmonoamine mit 1 bis 30 Kohlenstoffatomen als cokondensierbare Verbindungen eingesetzt. Beispiele für solche Amine sind Talgfettamin, hydriertes Talgfettamin, Octylamin, 2-Ethylhexylamin, Nonylamin, Decylamin, 2-Propylheptylamin, Undecylamin, Dodecylamin, Tridecylamin,Cetylamin, Stearylamin, Palmitylamin, Oleylamin, Kokosfettamin, mono-α-verzweigte sekundäre Amine, bis-α-verzweigte sekundäre Amine der allgemeinen Formel R⁴R³HC-HN-CHR¹R², wobei die Reste R¹, R², R³ und R⁴ unabhängig voneinander ggf. substituierte C₁₋₂₀-Alkylreste sind.

Pro Mol Asparaginsäure setzt man beispielsweise 1 bis 40, vorzugsweise 1 bis 20 Gew.-% der oben angegebenen Amine ein.

Als saure Katalysatoren kommen beispielsweise Phosphorsäure, phosphorige Säure, Phosphonsäuren, Diphosphorsäure, Triphosphorsäure, höhere kondensierte Phosphorsäuren, Schwefelsäure, Ammonium-, Natrium- und Kaliumhydrogensulfat in Betracht. In einigen Fällen weisen Mischungen von sauren Katalysatoren Vorteile auf. So verwendet man beispielsweise niedrigschmelzende Mischungen aus Ammonium-, Natrium- und Kaliumhydrogensulfat oder Mischungen aus Natrium- und Kaliumhydrogensulfat. Außerdem eignen sich Trimethylammoniumhydrogensulfat und Triethylammoniumhydrogensulfat als saure Katalysatoren. Besonders bevorzugt wird Phosphorsäure verwendet. Pro Mol Asparaginsäure setzt man beispielsweise 1 bis 40, vorzugsweise 5 bis 30 Gew.-% mindestens eines sauren Katalysators ein. Besonders bevorzugte Cokondensate werden durch Cokondensation von Asparaginsäure mit Talgfettamin und Phosphorsäure hergestellt.

Die Cokondensation erfolgt in einer zweistufigen Verfahrensführung. In der ersten Verfahrensstufe werden Asparaginsäure, Amin und saurer Katalysator unter Eintrag an mechanischer Energie in einem Extruder gemischt. Zu diesem Zweck führt man dem Einzugsbereich des Extruders teilchenförmige Asparaginsäure zu und gibt in einer anschließenden Dosierzone mindestens ein Amin und einen sauren Katalysator zu. Das Mischen der Komponenten kann bei Temperaturen von 20 bis 250, vorzugsweise 50 bis 150°C vorgenommen werden. Durch den Eintrag an mechanischer Energie in das System und durch die Neutralisationswärme, die bei dem Zusammenbringen von Amin und saurem Katalysator entsteht, wird die Mischung aufgeheizt. Die Mischung wird unter Erhitzen auf die Kondensationstemperatur, die beispielsweise 150 bis 300, vorzugsweise 180 bis 280°C beträgt, so weit kondensiert, daß am Ende des Extruders ein Vorkondensat ausgetragen wird, das mindestens 20 bis 95 Gew.-% der eingesetzten Asparaginsäure in kondensierter Form enthält. Die Kondensation wird vorzugsweise so weit geführt, daß am Ende des Extruders ein Vorkondensat ausgetragen wird, das mindestens 40 Gew.-% der eingesetzten Asparaginsäure in kondensierter Form enthält. In Abhängigkeit vom Kondensationsgrad werden am Ende des Extruders Reaktionsmischungen ausgetragen, die die Konsistenz von viskosen Schmelzen besitzen oder - sofern die Kondensationsgrade über 40 % liegen - auch unter den Temperaturbedingungen der Kondensation fest sind und in Form von krümeligen, nicht klebrigen Massen vorliegen.

Die Cokondensation erfolgt vorzugsweise kontinuierlich, wobei man dem Extruder absatzweise oder kontinuierlich die Einsatzstoffe zuführt und am Ende des Extruders die gleiche Menge an Vorkondensat austrägt. Die Verweilzeit im Extruder ist davon abhängig, wie hoch der Gehalt der Vorkondensate am Kondensationsprodukt (= Kondensationsgrad der Asparaginsäure) sein soll. Die Verweilzeiten der Reaktionsmischung im Extruder betragen beispielsweise 0,1 bis 30, vorzugsweise 0,2 bis 10 Min.

In der zweiten Verfahrensstufe werden die in der ersten Stufe erhaltenen Vorkondensate zu Ende kondensiert. Man erreicht dann Kondensationsgrade der Asparaginsäure von mehr als 98, vorzugsweise 100 %. Die Kondensation in der zweiten Verfahrensstufe erfolgt vorzugsweise in der Weise, daß man die Vorkondensate auf einer beheizten Fläche verteilt und innerhalb von 0,5 bis 300, vorzugsweise 1 bis 120 Min bei Temperaturen von 150 bis 300, vorzugsweise 180 bis 250°C tempert. Für diesen Verfahrensschritt eignen sich beispielsweise als Reaktionsapparate Heizbänder, Kneter, Mischer, Schaufeltrockner, Extruder, Drehrohröfen und anderen beheizbare Vorrichtungen, in denen die Kondensation von Feststoffen unter Entfernen von Reaktionswasser durchgeführt werden kann.

Die Kondensation in der ersten Stufe sowie die Nachkondensation in der zweiten Verfahrensstufe können bei Normaldruck, unter erhöhtem Druck oder auch unter vermindertem Druck, z.B. in dem Druckbereich von 1 bis 200 mbar durchgeführt werden. Vorzugsweise werden die Komponenten unter Atmosphärendruck kondensiert. Die Nachkondensation wird bevorzugt auf einem beheizbaren Band vorgenommen, indem man das Vorkondensat beispielsweise in einer Schichtdicke von 0,1 bis 10, vorzugsweise 0,5 bis 5 cm aufträgt und bei Temperaturen von 150 bis 300, vorzugsweise 180 bis 250°C zu Ende kondensiert. Die Kondensationsgrade in der zweiten Verfahrensstufe sind von der gewählten Temperatur, der Verweilzeit und dem Kondensationsgrad des Vorkondensats abhängig. In der zweiten Verfahrensstufe wird der Kondensationsgrad des Vorkondensats erhöht. Man kann die gesamte Asparaginsäure kondensieren, so daß der Kondensationsgrad 100 % beträgt. Ebenso ist es jedoch auch möglich, Kondensationsgrade in der zweiten Verfahrensstufe auf 69 bis 99, vorzugsweise auf mehr als 95 bis 100 % einzustellen. Die nicht in das Cokondensat einkondensierte Asparaginsäure kann durch Waschen mit Wasser oder mit verdünnten Säuren aus dem Cokondensat extrahiert werden. Sie kann aber auch im Polykondensat verbleiben. Diese Vorgehensweise ist bei einer technischen Ausführung bevorzugt. Um die Cokondensate aufzuarbeiten, werden sie mit der 1- bis 10-fachen, vorzugsweise mit der 1,5-bis 4-fachen Menge an Wasser extrahiert und danach als Aufschlämmung in Wasser durch Zugabe von Natronlauge bei pH-Werten von beispielsweise 8 bis 10 hydrolysiert. Die Succinimideinheiten der Cokondensate werden dabei in Natrium-Aspartat-Einheiten überführt. Die Salze der Polyasparaginsäure sind in Wasser löslich. Die Cokondensate enthalten bei Verwendung von gebundenen Phosphor aufweisenden Säuren 0,1 bis 20, vorzugsweise 0,5 bis 10 Gew.-% Phosphor in gebundener Form. Die einkondensierten Phosphorverbindungen können nicht mit Hilfe von Wasser oder Basen aus dem Cokondensat extrahiert werden.

Die nach dem erfindungsgemäßen Verfahren hergestellten Cokondensate sind sehr wirksame Inkrustationsinhibitoren in Waschmitteln. Sie eignen sich insbesondere zur Herstellung von Waschmitteln, die weniger als 25 Gew.-% Natriumphosphat, berechnet als Trinatriumpolyphosphat, enthalten oder die phosphatfrei sind. Die nach dem erfindungsgemäßen Verfahren hergestellten Cokondensate werden vorzugsweise zusammen mit Zeolithen zur Herstellung phosphatfreier Waschmittel verwendet. Die Waschmittel enthalten beispielsweise 0,2 bis 10, vorzugsweise 0,5 bis 5 Gew.-% der Cokondensate.

Die Prozentangaben in den Beispielen bedeuten Gewichtsprozent, sofern aus dem Zusammenhang nichts anderen hervorgeht.

### Beispiele

Man dosierte in den Einzugsbereich eines Extruders L-Asparaginsäure mit einer Teilchengröße von ca. 0,5 mm Durchmesser und in der anschließenden Dosierzone des Extruders getrennt voneinander geschmolzenes Talgfettamin und 75 %ige wäßrige Phosphorsäure. Die jeweils eingesetzten Stoffmengen können der Tabelle entnommen werden. Die Temperatur in der Dosierzone betrug 80°C. Die Mischung wurde in der nachfolgenden Heizzone des Extruders auf 200 bis 270°C erhitzt. Am Extruderausgang fiel das Vorkondensat entweder als weiche Paste bzw. als harte, krümelige Masse an. Die Verweilzeit der Reaktionsmischung im Extruder wurde durch Variation des Durchsatzes eingestellt. Kondensate, die bei Temperaturen von 250 bis 270°C und Durchsätzen von 2,3 bis 5 kg/h hergestellt wurden, waren auch im heißen Zustand fest und krümelig. Trotz der hohen Temperaturen blieben die Kondensate hellgelb.

Um den Kondensationsgrad zu ermitteln wurden die Cokondensate mit Wasser gewaschen und der unlösliche Rückstand bestimmt. Die experimentell ermittelte Polykondensatmenge wurde mit der rechnerisch zu erwartenden Polykondensatmenge in Relation gesetzt (Kondensationsgrad nach Verlassen des Extruders in % d. Th.).

Die Reaktionsbedingungen sowie der Kondensationsgrad sind in der Tabelle angegeben. Das Cokondensat hatte bei Verlassen des Extruders im Beispiel 1 eine weiche klebrige Konsistenz. Bei den Beispielen 2 bis 9 erhielt man ein hartes krümeliges Produkt.

Um die in der ersten Verfahrensstufe hergestellten Vorkondensate zu Ende zu kondensieren, temperte man jeweils 100 g des Vorkondensats bei 180°C eine Stunde lang. Danach ermittelte man den Kondensationsgrad mit Hilfe der oben beschriebenen Extraktion. Die Molmassen M_{w}der Kondensate lagen bei ca. 8.000 (bestimmt nach der Lichtstreuungsmethode).

**Tabelle**

| Bsp. Nr. | Phosphorsäure [%], bezogen auf Asparaginsäure | Talgfettamin [%], bezogen auf Asparaginsäure | Temperatur am Extruderausgang [°C] | Durchsatz (kg/h) | Kondensationsgrad nach Verlassen des Extruders [%] | Kondensationsgrad nach Tempern bei 180°C [%] |
|---|---|---|---|---|---|---|
| 1 | 20 | 10 | 200 | 5,46 | 55 | 100 |
| 2 | 15 | 5 | 200 | 5 | 60 | 100 |
| 3 | 15 | 5 | 250 | 5 | 64 | 100 |
| 4 | 15 | 5 | 250 | 5 | 61 | 100 |
| 5 | 15 | 5 | 250 | 2,5 | 70 | 100 |
| 6 | 15 | 5 | 270 | 2,5 | 76 | 100 |
| 7 | 20 | 10 | 250 | 2,73 | 80 | 100 |
| 8 | 20 | 10 | 270 | 2,73 | 94 | 100 |
| 9 | 7,5 | 5 | 270 | 2,3 | 50 | 69 |

## Patentansprüche

1. Verfahren zur Herstellung von Cokondensaten aus Asparaginsäure und Aminen durch Erhitzen von Asparaginsäure und Aminen in Gegenwart von sauren Katalysatoren unter Durchmischen bei Temperaturen bis zu 300°C in einem Extruder, dadurch gekennzeichnet, daß man dem Einzugsbereich des Extruders teilchenförmige Asparaginsäure zuführt und in einer anschließenden Dosierzone mindestens ein Amin und einen sauren Katalysator zuführt, die entstehende Mischung unter Erhitzen so weit kondensiert, daß am Ende des Extruders ein Vorkondensat ausgetragen wird, das mindestens 20 bis 95 Gew.-% der eingesetzten Asparaginsäure in kondensierter Form enthält und das Vorkondensat anschließend bei Temperaturen von 150 bis 300°C zu Ende kondensiert.

2. Verfahren nach Anspruch 1, dadurch gekennzeichnet, daß man in die Dosierzone des Extruders primäre oder sekundäre Alkylmonoamine getrennt von sauren Katalysatoren aus der Gruppe Phosphorsäure, phosphorige Säure, Phosphonsäuren, Diphosphorsäure, Triphosphorsäure, höher kondensierte Phosphorsäuren, Schwefelsäure, Ammonium-, Natrium- und Kaliumhydrogensulfat einsetzt.

3. Verfahren nach Anspruch 1 oder 2, dadurch gekennzeichnet, daß man pro Mol Asparaginsäure 1 bis 40 Gew.-% mindestens eines Alkylmonoamins und 1 bis 40 Gew.-% mindestens eines sauren Katalysators einsetzt.

4. Verfahren nach Anspruch 1 oder 2, dadurch gekennzeichnet, daß man pro Mol Asparaginsäure 1 bis 20 Gew.-% mindestens eines Alkylmonoamins und 5 bis 30 Gew.-% mindestens eines sauren Katalysators einsetzt.

5. Verfahren nach einem der Ansprüche 1 bis 4, dadurch gekennzeichnet, daß man als Amin Talgfettamin und als sauren Katalysator Phosphorsäure einsetzt.

6. Verfahren nach einem der Ansprüche 1 bis 5, dadurch gekennzeichnet, daß man die Kondensation im Extruder so weit führt, daß das Vorkondensat mindestens 40 Gew.-% der eingesetzten Asparaginsäure in kondensierter Form enthält.

7. Verfahren nach einem der Ansprüche 1 bis 6, dadurch gekennzeichnet, daß man das Vorkondensat auf einem beheizbaren Band in einer Schichtdicke von 0,1 bis 10 cm bei Temperaturen von 150 bis 300, vorzugsweise 180 bis 250°C zu Ende kondensiert.

## Claims

1. A process for preparing cocondensates of aspartic acid and amines by heating aspartic acid and amines in the presence of acidic catalysts while mixing at up to 300°C in an extruder, which comprises supplying the feed region of the extruder with particulate aspartic acid and a downstream metering zone with at least one amine and at least one acidic catalyst, condensing the resulting mixture to such an extent by heating that the downstream end of the extruder discharges a precondensate which contains at least 20-95 % by weight of the starting aspartic acid in condensed form, and then completing the condensation of the precondensate at from 150 to 300°C.

2. A process as claimed in claim 1, wherein the metering zone of the extruder is supplied separately with primary or secondary alkylmonoamines and acidic catalysts selected from the group consisting of phosphoric acid, phosphorous acid, phosphonic acids, diphosphoric acid, triphosphoric acid, more highly condensed phosphoric acids, sulfuric acid, ammonium hydrogen sulfate, sodium hydrogen sulfate and potassium hydrogen sulfate.

3. A process as claimed in claim 1 or 2, wherein from 1 to 40 % by weight of at least one alkylmonoamine and from 1 to 40 % by weight of at least one acidic catalyst are used per mole of aspartic acid.

4. A process as claimed in claim 1 or 2, wherein from 1 to 20 % by weight of at least one alkylmonoamine and from 5 to 30 % by weight of at least one acidic catalyst are used per mole of aspartic acid.

5. A process as claimed in any of claims 1 to 4, wherein the amine used is tallow fatty amine and the acidic catalyst used is phosphoric acid.

6. A process as claimed in any of claims 1 to 5, wherein the condensation in the extruder is carried on to such an extent that the precondensate contains at least 40 % by weight of the starting aspartic acid in condensed form.

7. A process as claimed in any of claims 1 to 6, wherein the condensation of the precondensate is completed on a heatable belt in a layer thickness of from 0.1 to 10 cm at from 150 to 300°C, preferably at from 180 to 250°C.

## Revendications

1. Procédé de préparation de co-condensats d'acide aspartique et d'amines par chauffage d'acide aspartique et d'amines en présence de catalyseurs acides et mélange à des températures allant jusqu'à 300°C dans une extrudeuse, caractérisé en ce que l'on amène dans la zone d'introduction de l'extrudeuse de l'acide aspartique sous forme de particules et, on introduit dans une zone de dosage suivante au moins une amine et un catalyseur acide, on condense le mélange obtenu en chauffant jusqu'à ce que l'on extrait à l'extrémité de l'extrudeuse un pré-condensat contenant au moins 20 à 95% en poids de l'acide aspartique utilisé sous forme condensée, et le pré-condensat est ensuite condensé jusqu'au bout à des températures de 150 à 300°C.

2. Procédé selon la revendication 1, caractérisé en ce que l'on utilise dans la zone de dosage de l'extrudeuse des alkylmonoamines primaires ou secondaires, séparées des catalyseurs acides choisis dans le groupe de l'acide phosphorique, de l'acide phosphoreux, des acides phosphoniques, de l'acide diphosphorique, de l'acide triphosphorique, des acides phosphoriques hautement condensés, de l'acide sulfurique, des hydrogénosulfates d'ammonium, de sodium et de potassium.

3. Procédé selon la revendication 1 ou 2, caractérisé en ce que l'on utilise 1 à 40% en poids d'au moins une alkylmonoamine et 1 à 40% en poids d'au moins un catalyseur acide, par mole d'acide aspartique.

4. Procédé selon la revendication 1 ou 2, caractérisé en ce que l'on utilise 1 à 20% en poids d'au moins une alkylmonoamine et 5 à 30% en poids d'au moins un catalyseur acide, par mole d'acide aspartique.

5. Procédé selon l'une quelconque des revendications 1 à 4, caractérisé en ce que l'on utilise une amine grasse de suif en tant qu'amine et de l'acide phosphorique en tant que catalyseur acide.

6. Procédé selon l'une quelconque des revendications 1 à 5, caractérisé en ce que l'on effectue la condensation dans l'extrudeuse jusqu'à ce que le pré-condensat contienne au moins 40% en poids de l'acide aspartique utilisé sous forme condensée.

7. Procédé selon l'une quelconque des revendications 1 à 6, caractérisé en ce que l'on condense le pré-condensat jusqu'au bout, sur une bande chauffante en une épaisseur de couche de 0,1 à 10 cm à des températures de 150 à 300, de préférence 180 à 250°C.
